# EUROPEAN PATENT APPLICATION

(11) **EP 4 067 322 A2**
(43) Date of publication of application: **05.10.2022**
(21) Application number: 22163099.9
(22) Date of filing: 18.03.2022
(51) Int. Cl.: C04B 35/053, C04B 35/08, C04B 35/117, C04B 35/443, C04B 35/488, C04B 35/50, C04B 35/56, C04B 35/565, C04B 35/58, C04B 35/583, C04B 35/584, C04B 35/626

(54) **METHOD AND COMPOSITION OF SCALABLE, INFILTRATION FREE CERAMIC MATRIX COMPOSITE**

(30) Priority: 03.04.2021 US 202163170454 P; 24.01.2022 US 202217582901
(71) Applicant: Palo Alto Research Center Incorporated, Webster, NY 14580 (US)
(72) Inventor: WEI, Junhua, Palo Alto, 94303 (US); IFTIME, Gabriel, Newark, 94560 (US); UNIDAD, Jerome, 75003 Paris (FR); PANDEY, Rahul, Cupertino, 95014 (US); CHINTAPALLI, Mahati, Mountain View, 94041 (US)
(74) Representative: Grünecker Patent- und Rechtsanwälte PartG mbB

(57) **Abstract**

A ceramic matrix composite has fibers, a ceramic matrix bonded to the fibers, and ceramic particles, distributed throughout the matrix. A method includes mixing a high char ceramic resin precursor with ceramic particles, adding a catalyst to create a mixture, heating the mixture to produce functionalized ceramic particles, and cooling the mixture to produce a resin having functionalized particles.

## Description

### RELATED APPLICATIONS

This application claims priority to and the benefit of US Provisional Application No. 63/170,454 filed April 3, 2021, which is incorporated herein by reference in its entirety.

### TECHNICAL FIELD

This disclosure relates to ceramic matrix composites, more particularly for manufacturing methods for ceramic matrix composites having high corrosion resistance.

### BACKGROUND

A major challenge with renewable energy, such as solar, and wind, is the absence of efficient, low-cost, long-term, meaning longer than 10 hours, energy storage systems required for grid backup to mitigate intermittent production from renewable energy sources. Another problem lies in the need for recovering and reusing high-temperature waste heat, typically greater than 1000 °C, in energy-intensive processes such as in steel making.

State-of-the-art technologies are either expensive, low efficiency or have a major environmental impact.

Thermal energy storage (TES) with molten salt is low cost and has a relatively high-density energy storage capacity. When used to convert the stored energy for producing electricity, their thermal-to-electricity conversion efficiency is only about 40%. This is due to the fact that the system operates at relatively low temperatures, in the range of 565 °C.

The thermal-to-electricity conversion efficiency can be increased to approximately 55% with high-temperature molten salts at over 700 °C. Such molten salts exist but they are highly corrosive, particularly at high temperatures, to conventional pipeline materials such as metals including stainless steel and high-cost advanced metal alloys such as nickel alloys. Corrosion leads to major losses of the depth of a pipeline containing these molten salts over the lifetime of the pipelines, creating a safety issue. Metal alloy-based molten salt containment pipeline systems would require frequent inspections, costly part replacement, and downtime for cleaning contaminated molten salt. In addition, corroded metal ions form particulate depositions in the cold spots, changing the flow behavior of the molten salts, overall changing the TES performance.

Currently available TES systems are limited by the poor corrosion resistance of salt-contacting pipe materials at high temperatures.

A need exists for containment materials that are corrosion resistant to high temperature molten salts, which would enable high efficiency molten salt TES systems for grid backup and for recovery of high-temperature waste heat.

The state-of-the-art storage systems for grid backup and for high-temperature waste heat recovery meet only some of the requirements, but not all as shown in the below table.

| Technology | Capital cost [$/kWh] | Energy density [Wh/kg] | Environmental Impact | Round-trip efficiency | **Effective cost [$/kWh]** |
|---|---|---|---|---|---|
| Battery | ~625 | 200 | Minor | <90% | <830 |
| CAES | < $1,200 | < 60 | Moderate | 70% | <1,710 |
| PHS | < 200 | < 1.5 | Major | <85% | <235 |
| Flow batteries | < 1000 | < 30 | Minor | <75% | <1,330 |
| TES molten salt (SOTA, 565 °C) | $26 | 100 | Minor | ~40% | 65 |
| ***The embodiments: TES molten salt (>700 °C)*** | ***$26*** | ***100*** | ***Minor*** | ***55%*** | ***48*** |

As shown in above, batteries are expensive at an estimated $625/kWh capital cost. Flow batteries, compressed air energy storage (CAES) are also expensive, and have lower energy density in the range of 10-60 Wh/kg. Pumped hydroelectric storage (PHS) is disadvantaged by its significant environmental impact. On the other hand, thermal energy storage with molten salt has low cost of less than $26/kWh capital cost, and $65/kWh effective cost when including the round-trip efficiency, and high energy density in the range of 100 Wh/kg. They can be used to produce electricity by providing the stored heat energy to turbines.

A molten salt TES system typically consists of a heating source such as solar, wind, conventional electricity or heat, a hot tank that stores the molten salt at a high temperature, and a cold tank that stores the molten salt at a lower temperature. The system can provide electricity when needed or can recover and reuse high-temperature waste heat of greater than 1000 °C in energy intensive processes such as in steel making.

One particular application of interest is for grid power back-up when the grid electricity is produced from renewable energy sources such as solar and wind.

The thermal-to-electricity conversion efficiency of current nitrate molten salt systems are low at approximately 40% because of its low hot tank temperature of 565 °C. Supercritical CO₂ Brayton cycle addition can increase the efficiency to 55% but requires greater than 700 °C temperatures, achievable with chloride salts such as magnesium chloride (MgCl₂) or potassium chloride (KCl), which are highly corrosive to conventional pipe materials such as stainless steel. Nickel alloys have lower corrosion rates of approximately 730 µm/year but could still lose up to -18 mm depth wall thickness over 25 years. Nickel alloy pipelines would require frequent inspections, costly part replacement and downtime for cleaning contaminated molten salt.

Certain ceramic matrix composites (CMC) are mechanically strong and corrosion resistant to high temperature molten salts. However, the use of existing CMC fabrication methods and materials is limited. Carbon/Carbon-Silicon Carbide (C/C-SiC) CMCs made by liquid silicon infiltration (LSI) have shown good corrosion resistance to chloride molten salts, but only in the absence of excess free silicon that reacts with the molten salt. In practice, complete elimination of free silicon in LSI is impossible. CMCs made by chemical vapor infiltration (CVI) show the best performance, but it has scalability challenges due to long processing times caused by multiple iterative cycles. In contrast, polymer infiltration and pyrolysis (PIP) has better scalability, but the high shrinkage of the object prior to sintering or firing, referred to as the green body, impacts the shape fidelity and requires up to 10-15 cycles of infiltration-pyrolysis to achieve dense CMCs. This may take weeks. Current CMC fabrication has to use modular fabrication for large or complex shaped structures. Currently, there is no manufacturing method that can produce CMCs compatible with greater than 700 °C molten salt, meet the corrosion resistance needs, or thermomechanical performance and scalability required for wide scale adoption.

### SUMMARY

According to aspects illustrated here, there is provided a ceramic matrix composite, comprising fibers, a ceramic matrix bonded to the fibers, and ceramic particles, distributed throughout the matrix.

According to aspects illustrated here, there is provided a method that includes mixing a high char ceramic resin precursor with ceramic particles, adding a catalyst to create a mixture, heating the mixture to produce functionalized ceramic particles, and cooling the mixture to produce a resin having functionalized particles.

### BRIEF DESCRIPTION OF THE DRAWINGS

FIG. 1 shows a graphical representation of a comparison of a current approach to ceramic mix composite manufacturing and an approach in accordance with the embodiments.
FIG. 2 shows a flowchart of one embodiment of a method of one-step fabrication of functionalized ceramic particles dispersed in a high char resin monomer.
FIG. 3 shows an embodiment of a functionalized ceramic particle.
FIG. 4 shows embodiments of high char resin monomers.
FIG. 5 shows a process of manufacturing carbon fiber structures using a composition of matter.

### DETAILED DESCRIPTION OF THE EMBODIMENTS

The embodiments here disclose a highly scalable method of manufacture and a composition of ceramic mix composites (CMCs) having good corrosion resistance, and good thermomechanical properties including the ability to handle high temperatures.

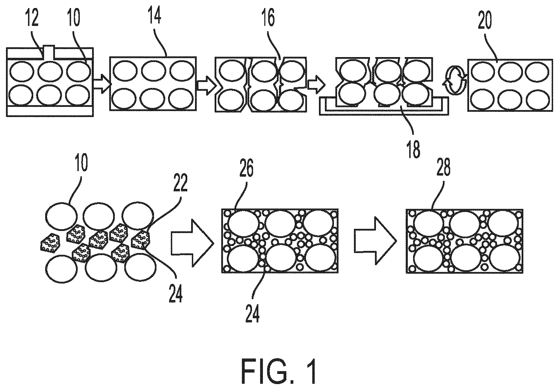

FIG. 1 shows a comparison of a current method of manufacturing CMCs, compared with a method of the disclosed embodiments. The top line shows the currently available process. The process starts with wet compressive molding or resin transfer molding (RTM) of carbon fibers such as 10 in a resin 12. This then undergoes curing at 14. The process then heats the cured structure to cause pyrolysis, leaving a structure having a porosity in the range of 15-25 or 10-40 percent by volume (vol %), shown by the gaps such as 16. The process then uses liquid silicon infiltration (LSI) or polymer infiltration and pyrolysis (PIP) at 18. As mentioned above, LSI suffers from issues with excess silicon and may achieve a dense structure with 5 vol% or less of the porosity by volume. The CMC made by PIP is very porous with 15-20 vol% porosity by volume, therefore it requires several infusion/pyrolysis cycles and takes much longer between infiltration at 18 and pyrolysis at 20.

In contrast, the embodiment discussed here uses pre-ceramic precursor resin consisting of 40-70, 30-70 or 50-70 vol% of novel functionalized ceramic nanoparticles such as 24 dispersed in a high char resin precursor 22, which may be cured at 26. A used here the term "functionalized" means that the particles have functional groups that can form chemically linked particle networks with functional groups on other particles or with the resin matrix. Functional groups may be covalently or physically fixed to the particle. Typically, these particle networks form in a highly dispersed manner throughout the matrix in which they are dispersed, avoiding agglomeration, and the chemical linking makes the networks stronger than unlinked particles. After dispersion, the particles are pyrolized at 28 to form the ultimate structure.

The ceramic particles may comprise silicon carbide (SiC), titanium carbide (TiC), zirconium carbide (ZrC), chromium carbide (Cr₂C₃), and similar materials, carbon black, inorganic oxides, nitrile-based materials such as titanium nitride (TiN), boron nitride (BN), silicon nitride (Si₃N₄), beryllium oxide (BeO), magnesium oxide (MgO), aluminum oxide (Al₂O₃), zirconium oxide (ZrO₂), samarium oxide (Sm₂O₃), thorium oxide (ThO₃), magnesium aluminum oxide (MgAl₂O₄), and molybdenum disilicide. Any ceramic particles with melting point greater than 1000 °C and having corrosion resistance to chloride salt and/or CO2 may be used in this application. One having ordinary skill in the art will recognize that this list is not exhaustive, nor is it intended to be, but identifies materials that have the desirable properties used in this process.

The terms "high char" or "high char yield" resin precursor, as used here, refer to those resins that, upon pyrolysis, produce higher than 30, or 40 wt% carbon, silicon carbide, or other ceramic compared to its original weight. These may comprise benzoxazines, acrylonitrile, phenolic, or arylacetylene based monomers, novolacs, and resol resins, oligomers or polymers. The particles of the ceramic materials listed above may be functionalized with these materials and are then mixed with the high char resin precursor in a powder form or other forms like liquid form.

The process deposits the particles on carbon fiber fabric shown by the carbon fibers 10. In one embodiment a rolling powder resin layup (RPL) process deposits the particles to create the green body. When the precursor is a high char yield precursor, upon pyrolysis this directly produces a ceramic matrix composite having less than 8 vol%, less than 12 vol%, or less than 15 vol% porosity. The higher the char yield of the ceramic precursor and the lower of the functional groups on the functionalized particles, the lower the porosity. A lower char yield resin and higher functional group may produce ceramic matrix composite with higher voids content, such as 15 vol%, 20 vol% or 25 vol%. In comparison, the methods using liquid resin infiltration without particles produces a green body having high porosity such as 16-40 vol%. Higher porosity requires additional infiltration/pyrolysis cycles to achieve high density CMC structures.

The composite resins comprises functionalized ceramic particles dispersed into a high char yield monomer/oligomer resin. For example, without limitation, these may comprise benzoxazine, acrylonitrile, or polycarbosilane precursor functionalized SiC, Si₃N₄, or TiC nanoparticles dispersed in a benzoxazine, acrylonitrile, or polycarbosilane ceramic precursor. The particles are functionalized by exactly the same or different monomer, oligomer, or polymer like the precursor in the high char yield resin. The high char yield resin may be a mixture of different chemical compounds or the same chemical compounds with different polymerization degree. Functionalized ceramic particles are critical because they minimize the void contents which would otherwise be created by agglomerated non-functionalized ceramic particles. Upon polymerizing or crosslinking by heating, photo, or other methods, the high char yield resin forms a solid structure, for example by polymerizing to produce a cured structure with direct bonding between the ceramic nanoparticles and the polymer matrix. This improves the particle/matrix interface, which produces high quality ceramics.

Besides of using preceramic curing resin, it is also possible to use preceramic thermoplastic directly. A possible method would include functionalize ceramic particle with groups exactly the same like the repeat unit or the branch of the thermoplastic; Disperse the functionalized ceramic particle into the preceramic thermoplastic and then make the green body by melting the mixture. As long as the thermoplastic has higher than 30 wt%, 40 wt% or 50 wt% ceramic yield, any structure can be used.

Several embodiments for fabrication of ceramic particles are suitable for the embodiments. Generally, a one-step process creates the functionalized ceramic particles dispersed into a high char yield monomer/oligomer/precursor. This eliminates the need to separate and purify the particles and then remix them with the monomer. For example, in one embodiment, acetylene-benzoxazine functionalized particles dispersed in acetylene-benzoxazine are fabricated in a one-step process. Acetylene-benzoxazine precursors produce high char yield upon pyrolysis.

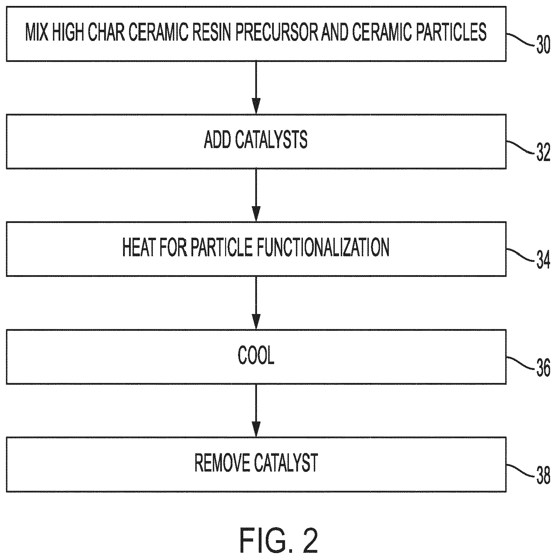

A process for a coupling reaction of organic alcohols with acetylenes has been described in solution, in prior art (L.R. Jefferies et al., Alcohols as electrophiles: iron-catalyzed Ritter reaction and alcohol addition to alkynes. Tetrahedron, 2014. 70(27): p. 4204-4207). The embodiment here differs from this approach by having particle functionalization, instead of organic molecules coupling; having a process suitable for high char monomers; in situ fabrication of functionalized particles in the monomer formulation, and using solvent-free, high temperature and high shear mixing procedure that reduces process cost. FIG. 2 shows a flowchart of one embodiment of a process to produce functionalized ceramic particles in a high char yield monomer.

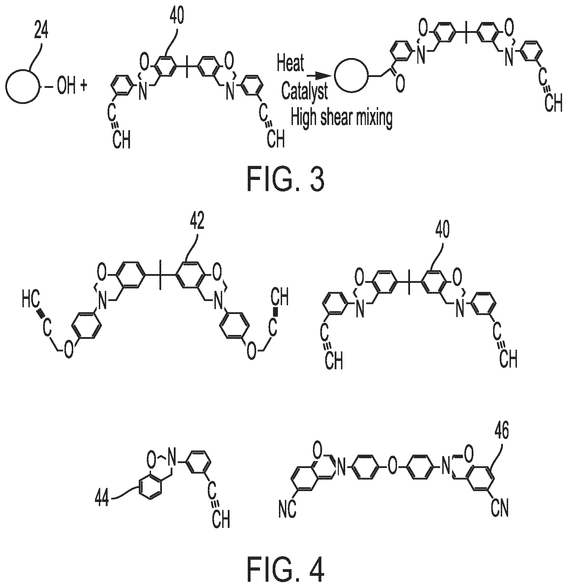

At 30, the unfunctionalized ceramic particles and the high char monomers are mixed together. The particle functionalization process is based on the chemical reaction between the high energy reactive sites or under saturated surface site, like hydroxyl (-OH) or acrylic (C=C) groups present onto the surface of ceramic particles 24, such as SiC nanoparticles after certain chemical and thermal treatments, with the high char yield monomer. FIG. 3 shows one example of such a reaction between SiC 24 and acetylene-benzoxazine 40. In this specific embodiment, the attachment of the acetylene-benzoxazine takes place by chemical coupling which produces a ketone group. A catalyst is added to the mixture at 32. The specific process uses a Lewis acid catalyst, such as FeCl₃ or FeCl₃/AgSbF₆. Other Lewis acid catalysts, like SiF₄ or BF₃, may catalyze the particle functionalization reaction.

The reaction may occur in a high shear mixing reactor, such as example an attritor, rheomixt, ball miller, homogenizer, roll miller, or single or twin extruder. A high shear mixing reactor has advantages because it helps break unfunctionalized particle aggregates and also keeps the functionalized particles well dispersed. Typically, the mixture is heated at 34, such as at a temperature in a range comprised from 60 °C to 160 °C. Any temperature can be used as long as the reaction temperature remains below the curing temperature of the high char yield monomer. In the specific example of acetylene-benzoxazine, any acetylene-functionalized benzoxazine can be used for the fabrication of the acetylene functionalized SiC nanoparticles from this embodiment. Suitable acetylene-benzoxazines suitable for this process are shown in FIG. 4, such as 40, 42, 44, and 46.

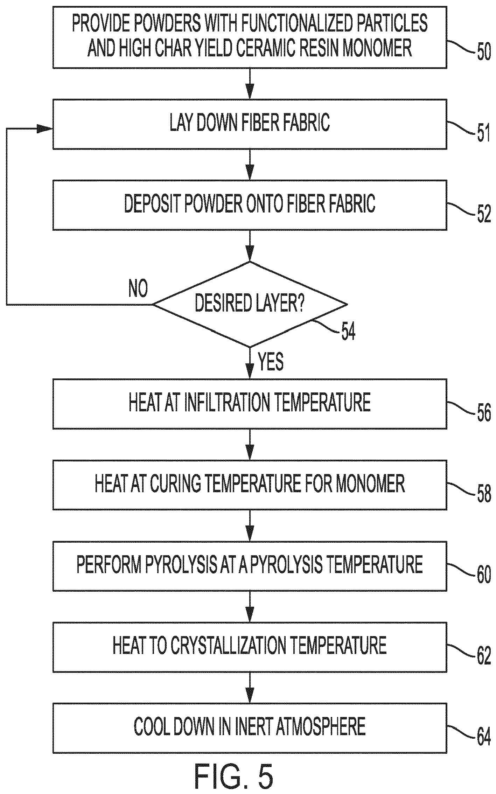

After heating at 34 in FIG. 2, the composition is cooled at 36 and the catalyst is removed at 38, leaving functionalized ceramic particles dispersed in a high char yield ceramic resin. The resin may comprise a monomer, oligomer, or a polymer, but will not be completely cured. This allows the composition of matter to be used in further processes, such as those discussed regarding FIG. 5, which may involve curing. The catalyst may be removed by extraction with water followed by drying the functionalized particle/resin monomer composition. The term "resin' as used here does not necessarily imply a solid, it may take other forms, cured or not.

In any of the above embodiments, one or more different particles can be incorporated, to produce mixed particles formulations. The particle loading occurs in a range from 1 vol% to 70 vol%. For ceramic applications, higher particle content, such as in the range of 40 vol% - 70 vol%, has advantages because it increases the ceramic yield and reduces the voids.

In another embodiment, the particles are functionalized first, then are dispersed in the high ceramic char monomer. An example of silica functionalization with benzoxazine by this method is described in [Tarek Agag, Tsutomu Takeichi, Synthesis and characterization of benzoxazine resin-SiO2 hybrids by sol-gel process: The role of benzoxazine-functional silane coupling agent, Polymer 52 (2011) 2757-2763]. Benzoxazine functionalized with a silane coupling agent is first synthesized and then it is coupled onto the surface of the particle by conventional silane coupling chemistry. Other similar processes may be suitable for the fabrication of benzoxazine functionalized particles and for the fabrication of functionalized particles with other high char functional groups. Formulations with these particles are fabricated by mixing them in a high char resin monomer, typically with high shear mixers.

Having discussed various methods and formulations of the functionalized particles in the high char yield ceramic precursor, the discussion can now turn to the use of these particles in manufacture of structures and objects from their use in combination with fabrics, whether pre-formed or not. FIG. 5 shows an embodiment of such a process.

Whether from the process set out above, or another process that creates the composition of matter having functionalized ceramic particles in a high char yield precursor, these particles start the process at 50. A layer of carbon fiber, or other fiber, the fabric is provided at 51. The carbon-fiber structure such as a fabric then receives the particles at 52. In a specific embodiment, an RPL process, designed to evenly distribute powder resin, deposits the powder resin with functionalized particles. This will incorporate up to 70 vol% of dispersed ceramic nanoparticles between the carbon fiber layup. This results from the assistance of a short impregnation length, high particle flowability, viscosity control, and vacuum pressure. This process may be repeated until it achieves the desired layer thickness at 54.

Other fiber reinforced plastic fabrication can also be used besides RPL, for example wet compression molding, resin transfer molding, filament winding, and braiding. These will all involve laying down a fiber form and an initial deposition of the powder onto the form, whether the powder is then wet compressed, heated or undergoes a different process.

The formulation could be in the solid, liquid or dispersed into a solvent depending on the fiber-reinforced plastic fabrication method.

Upon pyrolysis of the resulting green body, the process achieves dense CMCs with a voids fraction of 5-10 vol% or 10-15 vol%. This voids content is lower than the voids fraction achieved with CVI and PIP CMCs. This enables the infiltration-free CMC manufacturing which, in contrary with the current methods, does not need to have simple and thin structure design which allows efficient liquid or vapor access. Meanwhile, due to the low shrinkage, shape fidelity of the green body can be maintained. With these benefits, it is feasible to eliminate the modular fabrication issue and to fabricate large, thick and complex-shaped CMC in a single step.

Returning to FIG. 5, conventional manual or automated rollers may perform the rolling process. Heating to infiltrate the carbon fiber at 56 involves a temperature selected such as to be as high as possible to decrease the viscosity of the resin to facilitate infiltration into carbon fiber fabric to produce an infiltrated structure. However, the temperature must be lower than the curing temperature of the benzoxazine monomer. A suitable infiltration temperature range may comprise a range from 80 °C - 160 °C. The process can take from less than 1 minute to several hours, depending on the viscosity of the resin at the target temperature. At 58, the sample is heated at a higher, curing, temperature, to promote the high char yield monomer curing producing the green body. The curing temperature of the high char yield monomers typically comprises about 200 °C. A temperature range of 180 - 300 °C is suitable for curing. Fully cured structures can be achieved in minutes to hours. A higher curing temperature may decrease the curing time.

Pyrolysis is performed at a pyrolysis temperature comprising a range from 700 °C to 1000 °C, under inert gas, like nitrogen, argon, or reducing gas, like H₂, at 60 to produce a pyrolized structure. Suitable inert gases include argon, nitrogen and the like. The crystallization of the ceramic precursor may result from heating the pyrolized structure at a second temperature at 62, higher than the pyrolyzing temperature, typically comprising a range from 1400 °C to 2200 °C, but it may be as high as 3000 °C. Heating the pyrolized structure is optional. The various heating steps may occur under compression and/or vacuum. After all of the heating steps, the structure is cooled down at 64, possibly in an inert atmosphere. The resulting material comprises fibers bonded to a ceramic matrix, the ceramic matrix having a high particle loading discussed above.

Other variations on this process exist and are well within the scope of the embodiments. Besides carbon fiber fabric, other ceramic fiber fabrics are feasible to be used here, including silicon carbide fiber, silicon oxycarbide fiber, glass fiber or any fiber can withstand pyrolyzing temperature at 700 °C. There could be all kinds of coating on the fiber as well, like pyrolized carbon or BN.

The fabric structure may comprise all kind of fabrics, plain weave, twill weave, satin weave, filament, braids, an aligned or random fiber mat, a continuous fiber with an average length longer than 1 meter, or a fiber roll with an average length less than 80 micrometers, etc. Instead of a layup fabric process, discussed above, other fiber reinforced plastic fabrication methods are feasible to be used including but not limited to fiber winding, braiding, etc. Instead of using a furnace or autoclave to impregnate the whole fabric, using other heat source to melt and impregnate local fabric is also feasible. Instead of rolling the powder over the fabric, spray or other mechanism which could locally supply the powder. During pyrolysis and crystallization, compressing force, for example from a mold compressor inside the furnace, may be applied optionally, to restrain or even reduce the voids content. Similarly, the heating processes could occur in a vacuum environment or other conditions instead of an inert gas environment.

An important aspect with respect to utilization of the CMC's from these embodiments relates to the ability to join smaller parts in order to fabricate larger parts. One suitable method for joining parts like pipes uses adhesive bonding techniques. The adhesive for this application comprises ceramic functionalized particles identical to those used for the CMC fabrication dispersed in a high char yield monomer. As an example, in the case of C/C-SiC CMC, the adhesive will comprise SiC particles. This has advantages because the adhesive material is identical to the matrix material, ensuring excellent compatibility between the adhesive and the CMC parts being bonded. After joining, the joint is converted to a CMC by a process similar, such as pyrolysis followed by crystallization, to the one used for fabrication of the CMC parts. In the case of joining C/C-SiC CMC parts, the adhesive converts directly into a corrosion resistant ceramic, for example SiC nanoparticles, a carbon resin precursor and carbon fibers, ensuring the absence of any molten salt corrosion-prone elements.

The corrosion resistance of the C/C-SiC CMC to molten salts may be improved when compared with meals such as stainless steels and with. Nickel alloys. The corrosion rate in chloride molten salts may be in a range comprised from 10 µm/year to 700 µm/year. While the above discussion has focused on CMCs that contain molten salts, these may also take the forms of CMCs that contain ceramic particles, CO2 or liquid sodium.

The highly hard surface of the CMC makes it a suitable material to the particle as a heat transfer medium system. The high corrosion resistance of the CMC to the CO₂ makes it a suitable material to be used in the supercritical CO₂ power cycle, or system using high temperature CO₂. The high corrosion resistance of the CMC to the liquid metal, like the sodium, makes it a suitable materials to be used in sodium as heat transfer medium system or system needs to contain high temperature sodium.

The embodiments include a method of fabrication of functionalized ceramic particles dispersed in a high char yield resin precursor, of the various particles and precursors set out above. The method may include mixing the unfunctionalized ceramic particles with a high char yield monomer/precursor, adding a catalyst, heating to functionalize the particles, cooling the resulting material and removing the catalyst.

The embodiments include a composition of matter of the functionalized ceramic particles dispersed in a high char yield resin precursor.

The embodiments include specific examples of the method and the particles, such as SiC functionalized particles dispersed in benzoxazine resin.

The embodiments include processes of employing the functionalized ceramic particles in a high char yield precursor to manufacture structures or create fabrics that includes depositing the solid or liquid resin onto a carbon fiber fabric to a desired thickness, heating the fabric to an infiltration temperature, then heating it to a curing temperature, performing pyrolysis at a pyrolysis temperature, then heating it to a crystallization temperature, and cooling it down, either in an inert gas or vacuum atmosphere.

The embodiments include processes to manufacture corrosion resistant structures.

The applicant of the C/C-SiC could be the pipeline, receiver, heat exchanger or storage of concentrated solar power with molten salt, molten metal, particle, or gas as heat transfer medium. It could easily imply that this C/C-SiC CMC can also be used in concentrated solar reactor or high temperature reactor for iron, cement, or hydrogen production et al., nuclear reactors, turbine, or any high temperature or/and corrosive resistance applicants

All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the embodiments.

## Claims

1. A ceramic matrix composite, comprising:
fibers;
a ceramic matrix bonded to the fibers; and
ceramic particles, distributed throughout the matrix.

2. The ceramic matrix composite as claimed in claim 1, wherein the ceramic matrix has a particle loading of 1 vol% to 70 vol%.

3. The ceramic matrix composite as claimed in claim 1, wherein the ceramic matrix has a particle loading of 30 vol% to 70 vol%.

4. The ceramic matrix composite as claimed in claim 1, wherein the ceramic particles are at least one of the group consisting of: silicon carbide (SiC), titanium carbide (TiC), zirconium carbide (ZrC), chromium carbide (Cr₂C₃), carbon black, inorganic oxides, nitrile-based materials, titanium nitride (TiN), boron nitride (BN), silicon nitride (Si₃N₄), beryllium oxide (BeO), magnesium oxide (MgO), aluminum oxide (Al₂O₃), zirconium oxide (ZrO₂), samarium oxide (Sm₂O₃), thorium oxide (ThO₃), magnesium aluminum oxide (MgAl₂O₄), and molybdenum disilicide.

5. The ceramic matrix composite as claimed in claim 1, wherein the ceramic particles have a melting or decomposing temperature equal to or is higher than 1000 °C, and does not react with molten salt, nitrile, chloride, or fluoride salt.

6. The ceramic matrix composite as claimed in claim 1, wherein the fibers are coated.

7. The ceramic matrix composite as claimed in claim 1, wherein the matrix and the particles are made of a same material.

8. The composition of matter as claimed in claim 1, wherein the ceramic matrix composite has a porosity of less than 15 vol%.

9. A method, comprising:
mixing a high char ceramic resin precursor with ceramic particles;
adding a catalyst to create a mixture;
heating the mixture to produce functionalized ceramic particles; and
cooling the mixture to produce a resin having functionalized particles.

10. The method as claimed in claim 9, further comprising removing the catalyst.

11. The method as claimed in claim 9, wherein mixing the high char ceramic resin with the ceramic particles comprises using a high shear mixing reactor.

12. The method as claimed in claim 9, further comprising functionalizing the ceramic particles before mixing, and mixing disperses the particles into the high char ceramic resin.

13. The method as claimed in claim 9, wherein the mixing functionalizes the particles.

14. The method as claimed in claim 9, wherein adding the catalyst comprises adding a Lewis acid catalyst.

15. The method as claimed in claim 9, wherein adding the catalyst comprises adding at least one of SiF₄, BF₃, FeCl₃ or FeCl₃/AgSbF₆.

16. The method as claimed in claim 9, wherein heating the mixture comprises heating the mixture to a temperature in a range from 50 °C to 200 °C.

17. The method as claimed in claim 9, further comprising:
laying down a fiber structure;
depositing the resin onto the fiber structure
repeating the laying down and resin depositing until the desired layer number is reached;
heating the carbon fiber structure at an infiltration temperature high enough to decrease the viscosity of the resin to produce an infiltrated structure;
heating the infiltrated structure to a curing temperature of the resin to produce a green body; and
performing pyrolysis on the green body at a pyrolysis temperature to produce a pyrolized structure.

18. The method as claimed in claim 17, wherein the fiber structure comprises one of fabric, filament, braids, an aligned or random fiber mat, a continuous fiber with an average length longer than 1 meter, or a fiber roll with an average length less than 80 micron meter.

19. The method as claimed in claim 17, further comprising heating the pyrolized structure.

20. The method as claimed in claim 19, wherein heating the pyrolized structure comprises heating the pyrolized structure to a crystallization temperature in a range of 1400 °C to 3000 °C.

21. The method as claimed in claim 17, wherein the infiltration temperature is in a range of 80 °C - 200 °C, the curing temperature is in the range of 180 °C - 300 °C, and the pyrolysis temperature is in a range of 700 °C to 1200 °C.

22. The method as claimed in claim 17, wherein the depositing of the resin is done through one of an RPL process, wet compression molding, resin transfer molding, filament winding, or braiding.

23. A ceramic matrix composite, comprising:
a high char yield ceramic resin; and
ceramic particles functionalized with functional groups, dispersed in the high char yield ceramic resin.
